# EUROPÄISCHE PATENTANMELDUNG

(11) **EP 3 118 167 A1**
(43) Veröffentlichungstag der Anmeldung: **18.01.2017**
(21) Anmeldenummer: 16173546.9
(22) Anmeldetag: 08.06.2016
(51) Int. Cl.: C02F 1/48, C02F 3/10, C02F 3/34, C02F 3/30

(54) **VERFAHREN UND ANLAGE ZUR BEHANDLUNG VON AMMONIUMHALTIGEM ABWASSER**

(30) Priorität: 16.07.2015 DE 102015213417
(71) Anmelder: DENNERT PORAVER GmbH, 92353 Postbauer-Heng (DE)
(72) Erfinder: WEINBERGER, Karl, 94253 Bischofsmais (DE)
(74) Vertreter: FDST Patentanwälte

(57) **Zusammenfassung**

Es werden ein Verfahren und eine zugehörige Anlage zur Behandlung von ammoniumhaltigem Abwasser angegeben. Dabei wird im Abwasser enthaltenes Ammonium in einer Belebungseinrichtung zunächst mittels aerob oxidierender Bakterien zu Nitrit oxidiert. Anschließend werden Ammonium und Nitrit mittels ANAMMOX-Bakterien anaerob zu elementarem Stickstoff reduziert. Bei diesem Prozess entstehender Überschussschlamm wird aus der Belebungseinrichtung abgezogen. Mit dem Überschussschlamm abgezogene ANAMMOX-Bakterien werden separiert und in die Belebungseinrichtung rückgeführt. Um die Rückführung der ANAMMOX-Bakterien zu erleichtern, werden dem Abwasser in der Belebungseinrichtung als Besiedlungskörper für die ANAMMOX-Bakterien magnetische oder magnetisierbare Blähglaspartikel zugesetzt. Mit dem Überschussschlamm aus der Belebungseinrichtung abgezogene Blähglaspartikel werden dabei magnetisch aus dem Überschussschlamm separiert und in die Belebungseinrichtung rückgeführt.

## Beschreibung

Die Erfindung bezieht sich auf ein Verfahren zur Behandlung von ammoniumhaltigem Abwasser nach dem Oberbegriff des Anspruchs 1. Die Erfindung bezieht sich weiterhin auf eine Anlage zur Behandlung von ammoniumhaltigem Abwasser nach dem Oberbegriff des Anspruchs 7.

Solche Verfahren und Anlagen sind beispielsweise aus EP 2 792 646 B1, EP 2 366 673 B1, EP 2 163 524 B1 und EP 2 163 525 B1 bekannt. Dabei wird im Abwasser enthaltenes Ammonium in einem Belebungsbecken zunächst mittels aerob oxidierender Bakterien (AOB) zu Nitrit oxidiert wird. Anschließend werden Ammonium und Nitrit mittels ANAMMOX-Bakterien anaerob zu elementarem Stickstoff reduziert. Bei diesem Prozess entstehender Überschussschlamm wird aus dem Belebungsbecken abgezogen. Bei den bekannten Verfahren bzw. Anlagen wird der aus dem Belebungsbecken abgezogene Überschussschlamm mittels eines Hydrozyklons oder durch Sedimentation in eine leichte Phase (also eine Phase mit geringerem spezifischem Gewicht) und eine schwere Phase (also eine Phase mit höherem spezifischem Gewicht) getrennt. Die schwere Phase, die mehrheitlich die mit dem Überschlussschlamm aus dem Belebungsbecken abgezogenen ANAMMOX-Bakterien enthält, wird in das Belebungsbecken rückgeführt.

Die - im Vergleich zu anderen herkömmlichen Deammonifikationsmethoden - an sich bereits gute Effizienz der vorstehend genannten Verfahren und Anlagen wird allerdings eingeschränkt durch die vergleichsweise ineffiziente Abtrennung der ANAMMOX-Bakterien mittels des Hydrozyklons oder Sedimentation.

Der Erfindung liegt die Aufgabe zugrunde, eine besonders effiziente Behandlung von ammoniumhaltigem Abwasser zu ermöglichen.

Bezüglich eines Verfahrens zur Behandlung von ammoniumhaltigem Abwasser wird diese Aufgabe erfindungsgemäß gelöst durch die Merkmale des Anspruchs 1. Bezüglich einer Anlage zur Behandlung von ammoniumhaltigem Abwasser wird die Aufgabe erfindungsgemäß gelöst durch die Merkmale des Anspruchs 7. Vorteilhafte und teils für sich gesehen erfinderische Ausgestaltungen und Weiterentwicklungen der Erfindung sind in den Unteransprüchen und der nachstehenden Beschreibung dargelegt.

Die Erfindung geht von einem Verfahren zur Behandlung von ammoniumhaltigem Abwasser aus, bei dem im Abwasser enthaltenes Ammonium in einer Belebungseinrichtung in einer ersten Prozessstufe mittels aerob oxidierender Bakterien (AOB) zu Nitrit oxidiert wird. Anschließend werden Ammonium und Nitrit mittels ANAMMOX-Bakterien in einer zweiten Prozessstufe anaerob zu elementarem Stickstoff reduziert. In der aeroben Prozessstufe wird dem in der Belebungseinrichtung gesammelten Abwasser in an sich üblicher Weise Sauerstoff (insbesondere Umgebungsluft) zugeführt. Der bei dem zweistufigen Prozess entstehende Überschussschlamm wird aus der Belebungseinrichtung abgezogen. Bei dem Schlammabzug werden zwangsläufig auch ANAMMOX-Bakterien aus der Belebungseinrichtung ausgetragen.

Um eine effiziente Rückführung dieser ausgetragenen ANAMMOX-Bakterien in die Belebungseinrichtung zu ermöglichen, werden dem Abwasser in der Belebungseinrichtung erfindungsgemäß als Besiedlungskörper für die ANAMMOX-Bakterien magnetische oder magnetisierbare Blähglaspartikel zugesetzt. Bei der Verfahrensdurchführung bildet sich erkanntermaßen auf den Blähglaspartikeln ein Biofilm, der die im Verfahren benötigten ANAMMOX-Bakterien enthält. Die ANAMMOX-Bakterien werden somit auf den Blähglaspartikeln immobilisiert.

Die mit dem Überschussschlamm aus der Belebungseinrichtung abgezogenen, mit ANAMMOX-Bakterien besiedelten Blähglaspartikel werden durch magnetische Wechselwirkung aus dem Überschussschlamm separiert und in die Belebungseinrichtung rückgeführt. Durch die magnetische Abscheidung der Blähglaspartikel aus dem Überschussschlamm wird ein wesentlicher Effizienzgewinn erzielt.

Die Abscheidung der besiedelten Blähglaspartikel aus dem Überschusschlamm erfolgt somit insbesondere nicht unter Ausnutzung von Dichteunterschieden (also Unterschieden in dem spezifischen Gewicht der Bestandteile des Überschussschlamms), und insbesondere nicht mittels eines Hydrozyklons oder durch Sedimentation. In bevorzugter Ausführung der Erfindung weist der aus der Belebungseinrichtung abgezogene Überschussschlamm auch keine nennenswerten Inhomogenitäten der Dichte auf, die zur Abtrennung der ANAMMOX-Bakterien ausgenutzt werden könnten. Die ANAMMOX-Bakterien bilden somit insbesondere in bevorzugter Ausführung des erfindungsgemäßen Verfahrens keine abseparierbare schwere Phase des Überschussschlamms aus. Vielmehr wird das spezifische Gewicht der den ANAMMOX-Bakterien zugeordneten Bestandteile des Überschussschlamms wesentlich durch die Dichte der Blähglaspartikel bestimmt, wobei diese Dichte im Herstellungsprozess der Blähglaspartikel durch entsprechende Auslegung des Blähprozesses vorzugsweise derart eingestellt ist, dass der Überschlussschlamm eine im Wesentlichen homogene Dichte aufweist.

Grundsätzlich können im Rahmen der Erfindung für das Verfahren fabrikneue (also vor dem Einsatz in der Belebungseinrichtung unbehandelte) Blähglaspartikel als Besiedlungskörper eingesetzt werden. Vorzugsweise werden als Besiedlungskörper für die ANAMMOX-Bakterien allerdings Blähglaspartikel herangezogen, die zuvor mit mindestens einem von ANAMMOX-Bakterien verschiedenen Mikroorganismus, insbesondere mit methanerzeugenden Bakterien, vorbesiedelt wurden.
Die Blähglaspartikel werden hierbei entweder in einem vorbereitenden Schritt des erfindungsgemäßen Verfahrens vorbesiedelt, oder es werden bereits vorbesiedelte Blähglaspartikel als Ausgangsmaterial für das Verfahren herangezogen. In einer vorteilhaften Ausführungsform der Erfindung werden als Besiedlungskörper für die ANAMMOX-Bakterien Blähglaspartikel herangezogen, die zuvor - insbesondere über einen Zeitraum von mindestens zwei Monaten bis zu mehreren Jahren - als Besiedlungskörper in einer Biogasanlage eingesetzt wurden. Dieser Einsatz der Blähglaspartikel in einer Biogasanlage ist in der Patentanmeldung DE 10 2010 034 083 A1 beschrieben, auf deren Offenbarung im Rahmen der vorliegenden Anmeldung vollumfänglich Bezug genommen wird. Erkanntermaßen bewirkt die Verwendung vorbesiedelter Blähglaspartikel eine erhebliche Beschleunigung und Intensivierung der verfahrensgemäßen Besiedlung der Blähglaspartikel mit den ANAMMOX-Bakterien. Die Verwendung vorbesiedelter Blähglaspartikel trägt somit wirkungsvoll zur weiteren Effizienzsteigerung des Verfahrens bei.

Die erfindungsgemäße Anlage ist allgemein zur Durchführung des vorstehend beschriebenen erfindungsgemäßen Verfahrens eingerichtet. Die Anlage umfasst entsprechend eine Belebungseinrichtung, in der in einer ersten Prozesstufe im Abwasser enthaltenes Ammonium zunächst aerob mittels AOB zu Nitrit oxidierbar ist, und in der in einer zweiten Prozesstufe anschließend Ammonium und Nitrit mittels ANAMMOX-Bakterien anaerob zu elementarem Stickstoff reduzierbar ist. Die Belebungseinrichtung umfasst in einfacher Ausführung der Anlage ein gemeinsames Belebungsbecken, in dem beide Prozessstufen am gleichen Ort durchgeführt werden. Alternativ hierzu umfasst die Belebungseinrichtung verschiedene, räumlich separierte Becken oder Beckenabschnitte die aerobe Prozessstufe bzw. für die anaerobe Prozessstufe. Für die Sauerstoffzuführung in dem aeroben Teilprozess umfasst die Belebungseinrichtung in an sich üblicher Weise vorzugsweise eine Belüftungseinrichtung sowie gegebenenfalls ein Rührwerk. Die Anlage umfasst weiterhin eine Schlammabzugeinrichtung, mittels der bei diesem Prozess entstehender Überschussschlamm aus der Belebungseinrichtung abziehbar ist. Die Anlage umfasst schließlich Mittel zur Separierung von ANAMMOX-Bakterien von dem aus der Belebungseinrichtung abgezogenen Überschussschlamm und zur Rückführung der ANAMMOX-Bakterien in die Belebungseinrichtung.

Erfindungsgemäß ist als Mittel zur Separierung der ANAMMOX-Bakterien von dem aus der Belebungseinrichtung abgezogenen Überschussschlamm ein magnetischer Abscheider in der Schlammabzugseinrichtung angeordnet oder dieser nachgeschaltet, durch die die magnetischen oder magnetisierbaren Blähglaspartikel - und damit auch die darauf aufgesiedelten ANAMMOX-Bakterien -von dem Überschussschlamm abtrennbar sind.

Eine besondere Verkörperung der Erfindung ist schließlich durch die Verwendung von magnetischen oder magnetisierbaren Blähglaspartikeln als Besiedlungskörper für die ANAMMOX-Bakterien bei der - vorstehend beschriebenen - Behandlung von ammoniumhaltigem Abwasser gegeben. Dabei werden vorzugsweise Blähglaspartikel verwendet, die zuvor mit mindestens einem von ANAMMOX-Bakterien verschiedenen Mikroorganismus, insbesondere mit methanerzeugenden Bakterien, vorbesiedelt wurden. In zweckmäßiger Ausgestaltung werden Blähglaspartikel verwendet, die zuvor - insbesondere für einen Zeitraum von mindestens 2 Monaten bis zu mehreren Jahren - als Besiedlungskörper in einer Biogasanlage eingesetzt wurden. Alternativ hierzu werden Blähglaspartikel verwendet, die zuvorfür einen entsprechenden Zeitraum - in dem Belebungsbecken der biologischen Stufe einer Kläranlage vorbesiedelt wurden.

Die für das erfindungsgemäße Verfahren und in der erfindungsgemäßen Anlage eingesetzten magnetischen oder magnetisierbaren Blähglaspartikel sind vorzugsweise in der in DE 10 2010 039 232 B4 beschriebenen Weise hergestellt. Um die Besiedlung der Blähglaspartikel mit den ANAMMOX-Partikeln zu beschleunigen, sind die Blähglaspartikel optional mit einem organischen Material beschichtet.

In bevorzugten Ausführungsspielen der Erfindung entspricht die Anlage von ihrem Aufbau her einer der in EP 2 792 646 B1, EP 2 366 673 B1, EP 2 163 524 B1 oder EP 2 163 525 B1 beschriebenen Anlagen, mit der Modifikation, dass anstelle der dortigen dichtespezifischen Abscheider (insbesondere Hydrozyklone) magnetische Abscheider vorgesehen sind. Als Belebungseinrichtung umfasst die Anlage insbesondere ein Belebungsbecken.

Im Betrieb der Anlage werden dem in dem Belebungsbecken gesammelten Abwasser magnetisierbare Blähglaspartikel zugesetzt, die zuvor nach dem in DE 10 2010 039 232 B4 beschriebenen Verfahren hergestellt und für vier Jahre in einer Biogasanlage als Besiedlungskörper eingesetzt worden waren. In der Biogasanlage waren die Blähglaspartikel mit den dortigen Mikroorganismen, insbesondere mit methanbildenden Bakterien (wie sie beispielsweise in DE 10 2010 034 083 A1 genannt sind) vorbesiedelt worden.

Der oder jeder magnetische Abscheider ist beispielsweise durch einen Rohrabschnitt einer Schlammabzugeinrichtung der Anlage gebildet, in dem mittels mindestens eines Elektromagnets ein quer zur Flussrichtung des Überschussschlamms gerichtetes Magnetfeld erzeugbar ist. Der den Abscheider bildenden Rohrabschnitt ist selbst vorzugsweise nicht magnetisch oder magnetisierbar, so dass das Magnetfeld nach dem Abschalten des mindestens einen Elektromagnets vollständig zusammenbricht. Unter Wirkung des Magnetfelds lagern sich die mit ANAMMOX-Bakterien besiedelten Blähglaspartikel an den Rohrwänden ab und werden somit aus dem Überschussschlamm entfernt.

Zur Rückführung der Blähglaspartikel wird der magnetische Abscheider in regelmäßigen Abständen oder nach Bedarf fluidtechnisch von der Schlammabzugeinrichtung getrennt und mit dem Belebungsbecken verbunden. Danach werden der oder jeder Elektromagnet abgeschaltet und der Abscheider mit Schlamm oder Abwasser gespült, wodurch die in dem Abscheider angesammelten Blähglaspartikel mit den darauf aufgesiedelten ANAMMOX-Bakterien in das Belebungsbecken zurückgespült werden.

Bei bestimmten Ausführungen der Anlage umfasst die Schlammabzugeinrichtung parallel zu dem magnetischen Abscheider eine Bypassleitung, über die gegebenenfalls auch während der Spülphasen abgezogener Überschusschlamm an dem Abscheider vorbeigeleitet wird. In alternativer Ausführung der Anlage umfasst die Schlammabzugeinrichtung mehrere parallelgeschaltete magnetische Abscheider, die in alternierendem Wechsel gespült werden.

In einer Untersuchung wurde erfolgreich nachgewiesen, dass die gemäß DE 10 2010 039 232 B4 hergestellten Blähglaspartikel unter den gewöhnlich in einer Deammonifikationsstufe einer Kläranlage herrschenden Bedingungen mit ANAMMOX-Bakterien besiedelt werden, und dass die auf den Blähglaspartikeln aufgesiedelten ANAMMOX-Bakterien eine gute, und somit für das erfindungsgemäße Verfahren ausreichende Stoffwechselaktivität aufweisen.

Im Rahmen dieser Untersuchungen war zu klären, ob sich auf einer Probe von magnetisierbaren Blähglaspartikeln (auch als "Schaumglaspartikel", kurz MSGP bezeichnet) der Anmelderin, welche für ca. sechs Monate in einem Netzgewebe in das (nach dem DEMON^{®}- Verfahren arbeitenden) Deammonifikationsbecken einer kommunalen Kläranlage getaucht wurde, ein aktiver Biofilm von deammonifizierenden Bakterien gebildet hat. Die Untersuchungen wurden mittels Fluoreszenz-in-situ Hybridisierung (FISH) durchgeführt.

Parallel dazu wurden Proben der MSGP in einer Labortestzelle auf ihre Stoffwechselaktivität relativ zu dem bereits untersuchten Schlamm des DEMON-Reaktors untersucht. Dabei wurden die MSGP mit Substrat (Mischung aus Ammonium und Nitrit) versetzt und die Gasbildung (N₂) sowie die Abnahme der Substratkonzentrationen in der Lösung verfolgt. Die Messung der Gasbildung erfolgte mit Hilfe von Eudiometern.

Vor Zugabe in das DEMON-Becken der Kläranlage wurden die untersuchten MSGP über einen Zeitraum von etwa vier Jahren mit Methanbakterien vorbesiedelt. Die Partikel wurden auf ANAMMOX-Bakterien hin untersucht. Des Weiteren galt zu prüfen, ob sich diese dort als Biofilm bzw. im bereits bestehenden Biofilm angesiedelt haben.

Für die Untersuchung mit FISH wurde die DNA-Sonde AMX 820 verwendet, welche die in der Deammonifikation dominierenden Spezies Candidatus Brocadia Anammoxidans und Kuenenia Stuttgartiensis detektiert. Diese Vertreter der Planktomyceten stellen die Hauptpopulation in der DEMON-Anlage der Kläranlage dar.

In den Versuchen mit der FISH-Methode konnte gezeigt werden, dass die ANAMMOX-Bakterien einen geschlossenen Biofilm auf den in der Biogasanlage vorkonditionierten MSGP gebildet haben. Die MSGP selbst zeigten keine typisch rote Farbe, d.h. mit bloßem Auge war der Anammox-Biofilm nicht erkennbar. Testzellenversuche zur Bestimmung der Stoffwechselaktivität im Vergleich zu frischen Biomasse- Schlammproben aus dem DEMON-Reaktor zeigten, dass der Biofilm auf den MSGP (mit Vorbesiedlung des Biofilms) eine gute Stoffwechselaktivität zeigt. Dies bestätigt damit die Ergebnisse der FISH-Untersuchungen und zeigt, dass die Immobilisierung des ANAMMOX- Biofilms auf den MSGP erfolgreich war.

## Patentansprüche

1. Verfahren zur Behandlung von ammoniumhaltigem Abwasser, bei dem im Abwasser enthaltenes Ammonium in einer Belebungseinrichtung zunächst mittels aerob oxidierender Bakterien zu Nitrit oxidiert wird, und bei dem anschließend Ammonium und Nitrit mittels ANAMMOX-Bakterien anaerob zu elementarem Stickstoff reduziert werden, wobei bei diesem Prozess entstehender Überschussschlamm aus der Belebungseinrichtung abgezogen wird, und wobei ANAMMOX-Bakterien aus dem Überschussschlamm separiert und in die Belebungseinrichtung rückgeführt werden,
**dadurch gekennzeichnet,**
**dass** dem Abwasser in der Belebungseinrichtung als Besiedlungskörper für die ANAMMOX-Bakterien magnetische oder magnetisierbare Blähglaspartikel zugesetzt werden, und dass mit dem Überschussschlamm aus der Belebungseinrichtung abgezogene Blähglaspartikel magnetisch aus dem Überschussschlamm separiert und in die Belebungseinrichtung rückgeführt werden.

2. Verfahren nach Anspruch 1,
wobei der Belebungseinrichtung als Besiedlungskörper für die ANAMMOX-Bakterien Blähglaspartikel zugesetzt werden, die zuvor mit mindestens einem von ANAMMOX-Bakterien verschiedenen Mikroorganismus, insbesondere mit methanerzeugenden Bakterien, vorbesiedelt wurden.

3. Verfahren nach Anspruch 2,
wobei der Belebungseinrichtung als Besiedlungskörper für die ANAMMOX-Bakterien Blähglaspartikel zugesetzt werden, die zuvor als Besiedlungskörper in einer Biogasanlage eingesetzt wurden.

4. Verwendung von magnetischen oder magnetisierbaren Blähglaspartikeln als Besiedlungskörper für ANAMMOX-Bakterien bei der Behandlung von ammoniumhaltigem Abwasser, wobei im Abwasser enthaltenes Ammonium in einer Belebungseinrichtung zunächst mittels aerob oxidierender Bakterien zu Nitrit oxidiert wird, und wobei anschließend Ammonium und Nitrit mittels ANAMMOX-Bakterien anaerob zu elementarem Stickstoff reduziert werden.

5. Verwendung nach Anspruch 4, wobei die Blähglaspartikel zuvor mit mindestens einem von ANAMMOX-Bakterien verschiedenen Mikroorganismus, insbesondere mit methanerzeugenden Bakterien, vorbesiedelt wurden.

6. Verwendung nach Anspruch 5, wobei die Blähglaspartikel zuvor als Besiedlungskörper in einer Biogasanlage eingesetzt wurden.

7. Anlage zur Behandlung von ammoniumhaltigem Abwasser, mit einer Belebungseinrichtung, in der im Abwasser enthaltenes Ammonium zunächst mittels aerob oxidierender Bakterien zu Nitrit oxidierbar ist, und in der anschließend Ammonium und Nitrit mittels ANAMMOX-Bakterien anaerob zu elementarem Stickstoff reduzierbar sind, mit einer Schlammabzugeinrichtung, mittels der bei diesem Prozess entstehender Überschussschlamm aus der Belebungseinrichtung abziehbar ist, und mit Mitteln zur Separierung von ANAMMOX-Bakterien von dem aus der Belebungseinrichtung abgezogenen Überschussschlamm und zur Rückführung der ANAMMOX-Bakterien in die Belebungseinrichtung,
**dadurch gekennzeichnet,**
**dass** in die Belebungseinrichtung als Besiedlungskörper für die ANAMMOX-Bakterien magnetische oder magnetisierbare Blähglaspartikel eingebracht sind, und dass die Mittel zur Separierung der ANAMMOX-Bakterien von dem aus der Belebungseinrichtung abgezogenen Überschussschlamm durch mindestens einen magnetischen Abscheider gebildet sind.
